# EUROPEAN PATENT SPECIFICATION

(11) **EP 1 436 193 B1**
(45) Date of publication and mention of the grant of the patent: **25.01.2006**
(21) Application number: 02735215.2
(22) Date of filing: 27.03.2002
(51) Int. Cl.: B64C 1/00, B64C 23/06

(54) **AIRCRAFT CONFIGURATION WITH IMPROVED AERODYNAMIC PERFORMANCE**
FLUGZEUGANORDNUNG MIT VERBESSERTER AERODYNAMIK
CONFIGURATION POUR UN AVION A PERFORMANCE AERODYNAMIQUE AMELIOREE

(30) Priority: 18.10.2001 IT MI20012170
(43) Date of publication of application: 14.07.2004
(73) Proprietor: Aermacchi S.p.A., 21040 Venegono Superiore (Varese) (IT)
(72) Inventor: LUCCHESINI, Massimo, I-21020 Barasso (IT); IAIA, Pierclaudio, I-21100 Varese (IT)
(74) Representative: De Gregori, Antonella
(86) International application number: PCT/EP2002/003683
(87) International publication number: WO 2003/035467

(56) References cited:
- US-A- 4 739 957
- MICHAEL TAYLOR: "Brassey's World Aircraft & Systems Directory" 1999 , BRASSEY'S , LONDON XP002209647 page 144 -page 145 page 113 -page 114

## Description

This patent is referred to an aircraft configuration with high aerodynamic performance; in particular the aircraft according to the patent is designed like a high performance trainer with secondary operational capabilities.

Many aircraft have to be easily flown and must have peculiar dynamic characteristics in accordance with the mission to be carried out.

Typical examples of the above include light aircraft for aerobatics, trainers and combat aircraft.

These aircraft often have to flight at a high angle of attack (the angle between the aircraft and wind speed direction at any time).

It is easy to understand that, under these flight conditions, the aircraft has to be very stable and easily controlled by the pilot, in order to maintain a safe attitude during flight.

This stability is obtained using special automatic equipment able to generate forces and moments to counterbalance undesirable flight attitudes.

While the aircraft stability along the pitch axis can be controlled optimising the static margin and time-to-double amplitude, the presence of lateral-directional instability (on "roll" and "yaw" axes) at high angles of attack can be difficult to control even using highly sophisticated Flight Control Systems.

It is therefore necessary to maximise the aircraft lateral-directional stability up to high angles of attack in order to allow aircraft control/agility and to avoid flight departures and spins.

Usually and in particular lately, attempt has been done by simply modifying the fuselage aerodynamic shaping and other aircraft parts. Up to now those attempts have not lead to successful results.

In the frame of the requirements listed above, one of the goal of this patent is, therefore, to avoid the mentioned problems and, in particular, the problem relevant to an aircraft configuration with improved aerodynamic performance, able to optimise the aircraft behaviour especially during high angle of attack flights.

Another goal of this patent is to present an aircraft configuration with improved aerodynamic performance, able to reduce buffet effects typical of low aspect ratio wings with thin profile and variable camber.

Another goal of this patent is to realise an aircraft configuration with high aerodynamic performance, able to avoid successfully, the loss of lateral-directional stability and the negative effects generated by the engine flow next to the fuselage side wall and the horizontal tail, as far as drag, stability and longitudinal control are concerned.

An additional goal of this patent is to realise an aircraft configuration with improved aerodynamic performance, able to recover from spin, optimising, in general, the aircraft behaviour at high angles of attack.

These and other goals are met by an aircraft configuration with improved aerodynamic performance, according to claim 1, to which we refer to.

Profitably, the aircraft subject of this patent is designed, in particular, like a trainer with high performance and secondary operational capabilities.

The configuration includes a twin engine "formula" and it is characterised by the presence of a range of very peculiar structural details.

The twin-seat cabin (in tandem) with interconnected flight controls is coupled with, a forebody with basically circular and variable section, characterised by low aspect ratio, optimised for high angles of attack flights. In this space a radar for the aircraft operational version can be easily integrated.

The forebody shape and dimensions are optimised in order to reduce its vortex interference on the aircraft aerodynamic characteristics at mid/high angles of attack; the mentioned characteristics allow to reduce the directional asymmetries at high angles of attack, typical of forebody with circular or elliptical section.

Moreover the wing profile is different from the standard wing profiles, in order to integrate a system able to minimise the buffet effects, typical of low aspect ratio wings with thin profile and variable camber.

The aerodynamic design includes also a LEX (Leading Edge Extension) vortex control device, properly sized, in order to symmetrize the LEX vortex bursting at mid/high angles of attack, as the symmetric vortex bursting allows to keep the lateral-directional stability and the aircraft control at mid/high angles of attack. Such a LEX is disclosed by "Vertical Tail Buffeting of Fighter Aircraft", B.H.K. Lee, Progress in Aerospace Sciences 36; pages 193-279 (ELSEVIER SCIENCE LTD, April 2001.

The training aircraft under this patent has, at least one engine air intake able to guarantee the performance and a proper fluid-dynamic interface with the engine; the design does not foresee the integration of a typical diverter on the upper lip of an air intake, integrated with a LEX.

Finally, the horizontal tail staggering allows to get a decrease in the aerodynamic drag produced by the fuselage afterbody, to optimise the aircraft spin behaviour and to improve the aircraft aerodynamic design for high angles of attack manoeuvres.

Further goals and benefits of this patent shall be clear from the following description and from the attached drawings, provided solely, but not limited to a sample, as follows:
- picture 1 is a side view of an aircraft, in particular of a trainer aircraft, designed accordingly this patent;
- picture 2 is a top view of an aircraft, in particular of a trainer aircraft, designed accordingly to this patent;
- picture 3 is a bottom view of an aircraft, in particular of a trainer aircraft, designed accordingly to this patent;
- picture 4 is a front view of an aircraft, in particular of a trainer aircraft, designed accordingly to this patent;
- picture 5 is a back side view of an aircraft, in particular of a trainer aircraft, designed accordingly to this patent;
- picture 6 is a section, along the VI-VI line of picture 2;
- picture 7 is a partial and enlarged view of a detail of the aircraft configuration designed accordingly to this patent;
- picture 8 is a section, along the VIII-VIII line of picture 7;
- picture 9 is a section, along IX-IX line of picture 7;
- picture 10 is a section, along X-X line of picture 7;
- picture 11 is a section, along XI-XI line of picture 7;
- picture 12 is a section, along XII-XII line of picture 7;
- picture 13 is a section, along XIII-XIII line of picture 7;
- picture 14 is a section, along XIV-XIV line of picture 7;
- picture 15 is a section, along XV-XV line of picture 7;
- picture 16 is a section, along XVI-XVI line of picture 7;
- picture 17 is a section, along XVII-XVII line of picture 7;
- picture 18 is an enlarged isoview of a detail of the aircraft configuration designed accordingly to this patent.

Making reference to the mentioned pictures, an aircraft, in particular a trainer aircraft, having a configuration with improved aerodynamic performance, accordingly to this patent, is generally indicated with reference 10.

The aircraft 10 includes a fuselage 12, having an upper side wall 14 and a lower side wall 16, and two wings, respectively a right wing 18 and a left wing 20, fitted to the fuselage 12.

The right wing 18 has the tip 22, while the left wing 20 has the tip 24.

The aircraft 10 features also a rudder 34, fitted to the vertical fin 38 and a horizontal stabiliser 44 having a right horizontal stabiliser 26 and a left horizontal stabiliser 28 and relevant tips 30, 32.

In preferred or realising, but not limiting forms of the patent, as already mentioned above, the type configuration is a twin-engine formula and foresees two air intakes 46 for the engines 48, with relative engine nozzles 60.

Finally, in the fuselage forebody area 52, in which a radar for the aircraft 10 operational version could be integrated, a two in tandem pilot cockpit 54 is installed, with interconnected flight controls, protected by a windshield 62. A probe 58 could be foreseen, in order to carry out in flight refuelling for the aircraft 10.

With reference to pictures 2 and 3, each wing 18, 20 of the aircraft 10 presents outer ailerons 56 and take-off and landing double slotted flaps 64, integrated in the trailing edge 70 of each wing 18, 20, and other devices for wing camber optimisation (leading edge droops) 66, integrated in the wing leading edge 68. Their profile is shaped following a particular geometry, on the basis of the general aerodynamic design mentioned in this description.

In particular, the technical characteristics of the aircraft 10, aimed to obtain high aerodynamic performance and flight stability, according to this patent, are as follows.

First of all, the aerodynamic design is characterised by the presence of a LVC ("LEX Vortex Controller") device to control the LEX ("Leading Edge Extension") vortex at mid/high angles of attack (ref. 72, picture 1) .

The LEX, with gothic platform equal to 6,4% of the reference wing gross area (as per this patent), allows vortex lift generation at high angles of attack and LEX design is further refined integrating the LVC ("LEX Vortex Controller") at its tip, in order to ensure the vortex symmetric bursting at high angles of attack for sideslip attitudes and prevent loss of lateral-directional stability.

The LEX vortex controller sizing 72 depends on the front LEX size and, in any case, the bigger the LEX is the higher the LVC must be; the tolerance can be defined by the ratio between the LEX area and the height of the corresponding LVC. The design point of this ratio is equal to 2,35 m and the applicable tolerance range varies from +100% and -50% from the design point.

The fuselage forebody 52 shape of the aircraft 10 and its dimensions are even more optimised in order to reduce its vortex interference on the aerodynamic characteristics of the aircraft 10 at mid/high angles of attack; the mentioned characteristics allow also to reduce the directional asymmetries at high angles of attack, typical for the forebody with standard circular or elliptical sections.

The forebody 52 of the aircraft 10, according to the patent, shows a range of forebody sections with different geometry starting from the apex 74 up to the forebody edge merging with the LEX apex.

An exemplifying and preferred, but not limiting way, of the geometric shape and of the sequence of sections with different geometry, between the apex 74 and a section referred to the quote 76 (positioned more or less at the beginning of the twin-seat cabin 54), is presented, in sequence, at pictures 8-17, from which is inferable that from a roughly low aspect ratio circular section (pictures 8-11) a chined section is got (pictures 12-17).

From the mentioned pictures is clear the shift of the forebody 52 from the longitudinal axis K, from the apex 74 up to the reference section presented in picture 17.

In particular, according to a preferred form of the patent, the ratio between the length of the forebody 52, starting from the apex 74 up to the section along the XVII-XVII line (reference L), and the average between the lengths A and B of the two axes of the section (section presented in picture 17), presents a value of 1,873, with a tolerance equal to ±10%.

The structural peculiarity and its effect on the flight conditions come out from the combination of the parameter mentioned above (plus or minus the tolerance, if any) and the sequence of the forebody 52 sections, from the apex 74 of the aircraft 10 up to the reference section along XVII-XVII line.

In picture 18 is also shown in detail an engine air intake, indicated as item 46, which contributes to guarantee the performance of aircraft 10, above all as far as the fluid-dynamic interface with the relevant jet engine is concerned.

The air intake 46 shows a variable leading edge radius optimised in the lower part in order to reduce the engine face flow distortion at high angles of attack and in the side part in order to reduce the transonic spillage drag.

In particular, the inner lip average leading edge radius 76A is equal to 7 mm, while the lower lip average leading edge radius 78 is equal to 17,5 mm and that of the outer lip 80 is equal to 14 mm, so that the capture area of the air intake is about 0,322 m², and the throat area of the air intake is about 0,257 m² and the engine face area is about 0,273 m² (this values are referred to one air intake).

The air intake 46 is diverteless on the upper side of each air intake side and integrated with a LEX, thanks to the peculiar ratio between LEX length and shape; effectively the LEX acts as a shield at high angles of attack.

The air intake can foresee also the presence of two additional blow indoors (not showed in the pictures), positioned on the upper wing-body junction between wing 18, 20 and fuselage 12, which open when the pressure in the duct is lower than pressure on the upper wing-body junction, thanks to pre-loaded springs integrated in the blow indoor hinges.

These blow indoors aim is to reduce, when they open, the local angles of attack on the air intake lips 46 at high angles of attack, reducing the air mass flow quantity passing through the above mentioned air intake 46.

One of the characteristics that guarantee the high performance, the stability and the aerodynamic structure of the aircraft 10, is the staggered tails 44 and 38. They allow to reduce the aerodynamic drag generated by the fuselage afterbody, to optimise the spin behaviour of the aircraft 10 and to improve its whole aerodynamic design for high angles of attack flights.

The vertical fin with trapezoidal platform includes the rudder 34 and is coupled to the wing. This means that the leading edge of the rudder, indicated as item 36 in picture 1, overlapping the trailing edges 70 of each wing 18, 20, in order to allow the recovery from the spin and to optimise the behaviour of the aircraft 10 at high angles of attack.

The horizontal tail with trapezoidal platform, is moved by two independent actuators which allow its symmetric and asymmetric deflection. The horizontal tail presents a hinge axis, indicated as item 86 in picture 2, which is oriented, on the right and on the left, of about 7,5°, from a lateral axis 88, in order to optimise the hinge and the inertial moments.

The staggered tails can be further characterised by a tolerance referred to the ratio between quote C, showed in picture 1 and defined as the distance between the apex of the vertical fin root chord and the apex of the horizontal tail root chord 44, and the tail arm, equal to 4181 mm; it follows that the reference ratio given above is equal to 1932/4181 mm = 0,462, with an applicable tolerance equal to 10%.

Also the wing profile is modified and optimised in comparison with traditional trainer aircraft, in order to reduce the "buffet" effect, considering the characteristics of a low aspect ratio wing with thin airfoil and variable camber.

According to the patent, on the contrary, a wing 18, 20 with trapezoidal platform and mid aspect ratio (AR=4) is used, characterised by the presence of a saw tooth (showed as S in picture 2) at 67,5% of the gross wing span; the modification, in comparison with standard wings, is first of all related to the leading edge radius, showed as R in picture 6 which was circular (prior art) and now becomes triangular, in order to optimise the stagnation point position, in presence of the leading edge 68 and of the "Leading Edge Droops" 66 deflected at mid angles of attack.

As clearly results from picture 6, which shows an enlarged section along VI-VI line of picture 2, each wing 18, 20 presents a variable camber profile, both along the leading edge 66 ("Leading Edge Droop") and along the trailing edge 70, near the ailerons 56. The ailerons are scheduled only in transonic regime, to have a camber reduction in order to reduce compressibility effects.

Quantitatively, the design point of the chord percentage extension of the leading edge 68 is equal to 0,36%, with a tolerance between +0,5% and -0,2% from the nominal value, while the design point of the gross wing span at which the chord extension is applied, in comparison with the standard solutions, is equal to 8,2%, with a tolerance between +10% and -5% from the nominal value.

Other characteristics of the aircraft 10 include the fuselage 12, which, in the afterbody 16, foresees the integration of the engine nozzles and the presence of a fuselage tail, indicated as item 90 in picture 3.

Also the area near the engine nozzles is optimised in order to reduce the negative effects, in terms of drag and longitudinal stability/control, generated by the engine flow next to the fuselage side wall 12 and the horizontal tail 44.

The aircraft 10 features also a tricycle landing gear, including a nose landing gear and a main landing gear. The nose landing gear is a leg strut, with four doors closing the bay, and backside retraction.

The main landing gear has frontside retraction in order to allow fuselage belly loads installation.

The aircraft 10 under this patent fits an automatic flight control system ("Fly By Wire"), digital quadruplex redundant, which allows to optimise the performance and the flight qualities; the system allows to improve the flight safety limiting, automatically, flight regimes, which could be uncomfortable to the pilot or could lead to lose control ("Carefree Handling").

From the above description the characteristics of the aircraft configuration with improved aerodynamic performance, subject to this patent, are resulting clear, such as its advantages.

It is also clear that several other modifications can be applied to the structure of the aircraft in subject, without exceeding the novelties included in the concept of the patent. It is also clear that, in applying the patent, materials, shapes and dimensions of the above mentioned details could vary in compliance with the requirements and the same details could be replaced with other details having the same technical characteristics.

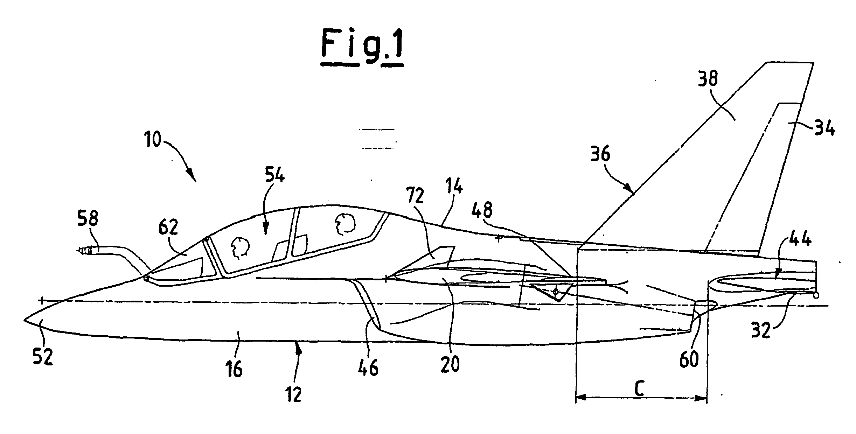

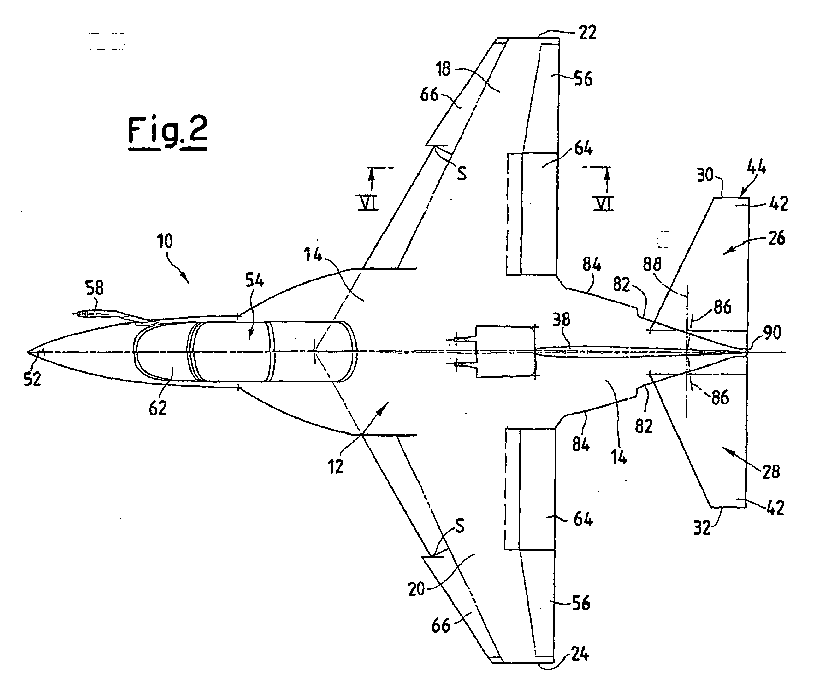

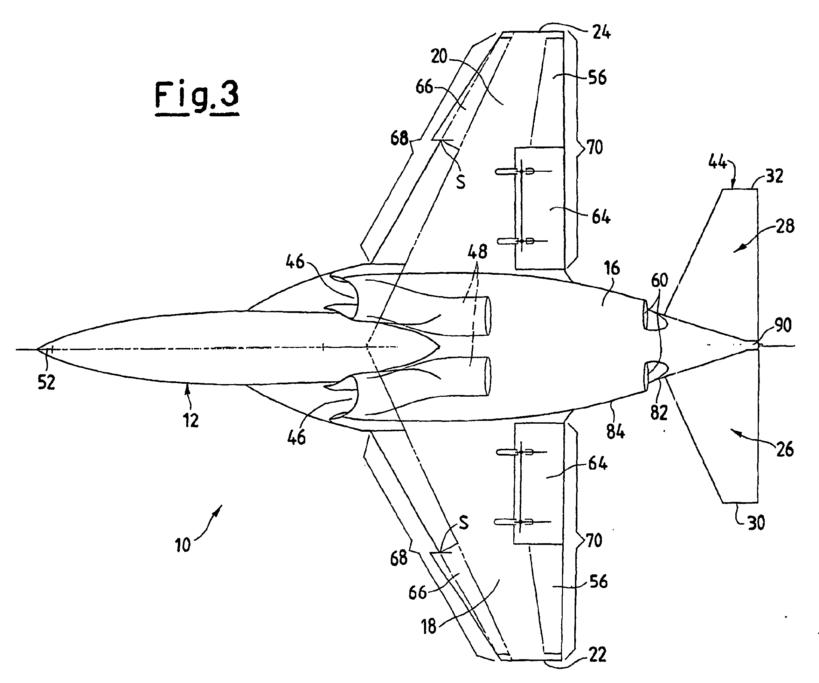

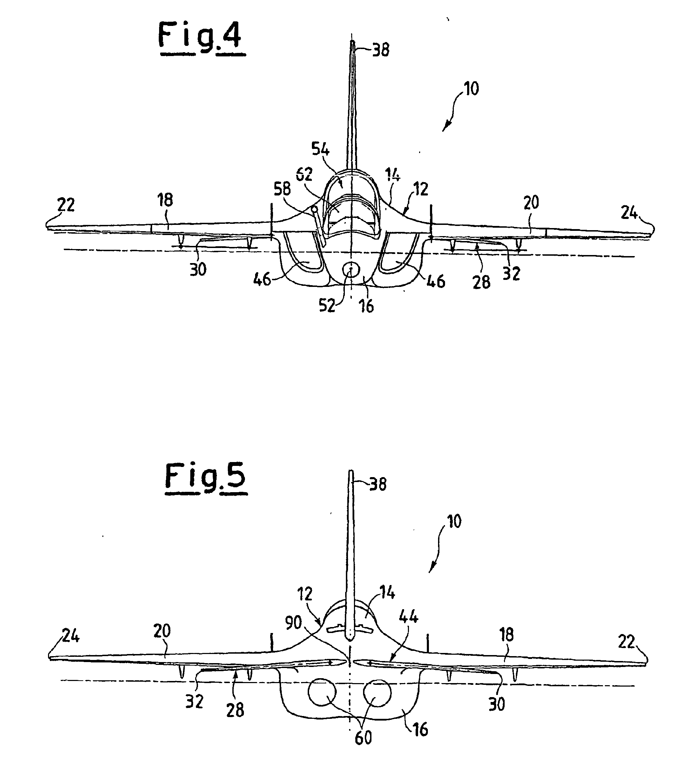

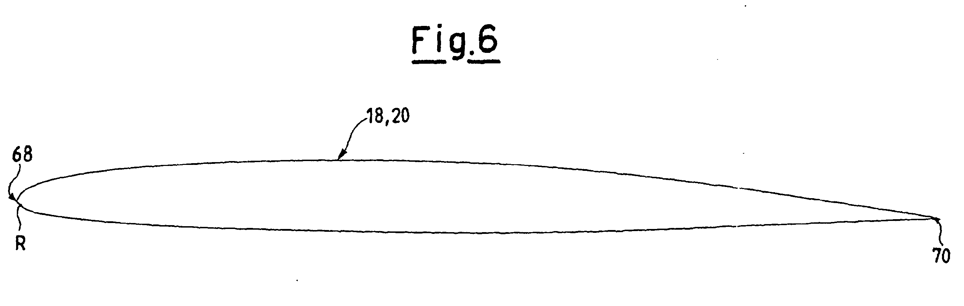

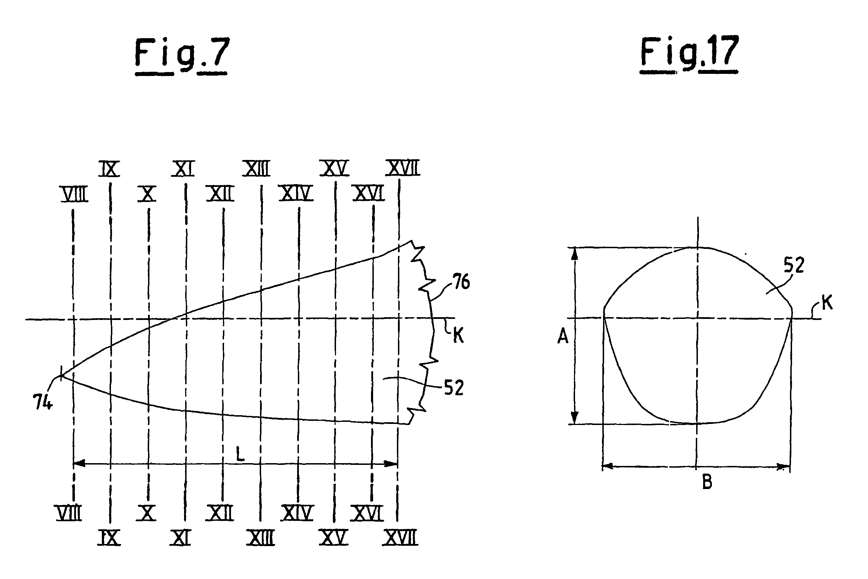

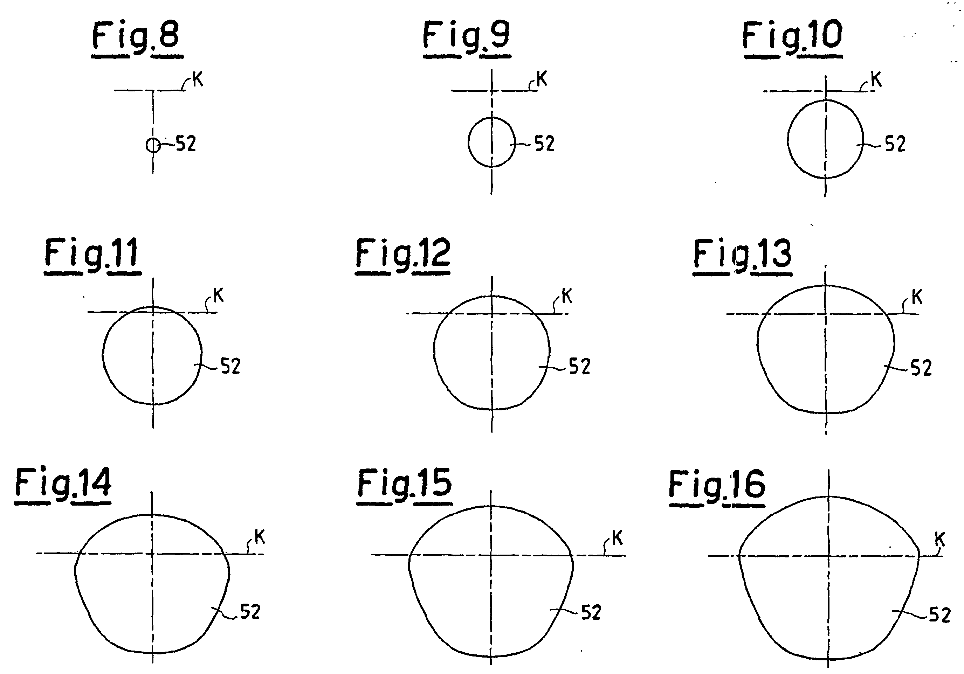

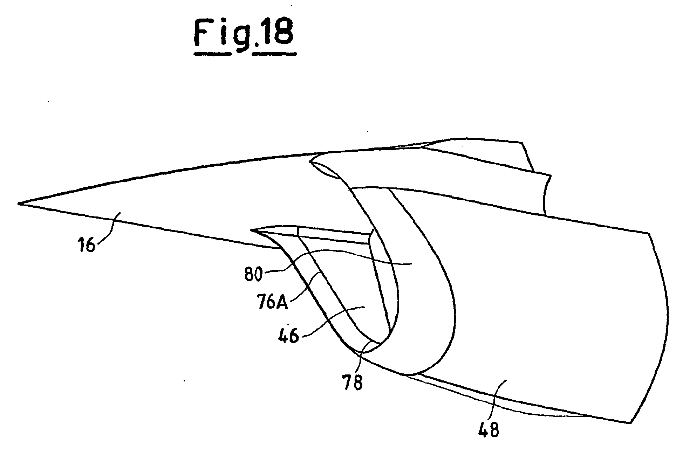

## Claims

1. Configuration of an aircraft (10) with improved aerodynamic performance, which allow to keep directional stability at mid/high angles of attack, said aircraft (10) including a fuselage (12) fitted with wings (18,20), at least one air intake (46) and a fuselage forebody (52) with tapering section, whereby in that said aircraft (10) includes a Leading Edge Extension (LEX) Vortex Control Device (72) shaped such to symmetrize the bursting of the vortex generated by such LEX at mid-high angles of attack, wherein the ratio between the LEX area and the corresponding LEX Vortex Control Device height is equal to 2,35 m with a tolerance range varying from +100% and -50% of said ratio, said LEX Vortex Control Device cooperating with staggered tails (44 and 38), obtained by the coupling of the vertical fin to the wing (18, 20), whose leading edges (36) overlap the trailing edges (70) of each wing (18,20), in order to maintain lateral-directional stability.

2. Configuration of an aircraft(10)as per claim 1, **characterised by** the fact that the mentioned fuselage forebody (52) with low aspect ratio, shows a profile with variable geometry starting from the apex (74) up to the edge coupling the mentioned forebody (52) to the LEX apex, said profile shows, starting from the apex (74), a roughly circular section and then, at the LEX apex, chined section.

3. Configuration of an aircraft (10) as per claim 1, **characterised by** the fact that the staggered tails (44 and 38) is got coupling the vertical fin with trapezoidal platform to the wing (18, 20) and whose leading edges (36) overlap the trailing edges (70) of each wing (18, 20), in order to optimise the behaviour of the aircraft (10) at high angles of attack.

4. Configuration of an aircraft (10) as per claim 3, **characterised by** the fact that such tail staggering is got through a horizontal tail (44) having trapezoidal platform and the capability of symmetric and asymmetric deflection the horizontal tail presents a hinge axis (86), which is inclined from a lateral axis (88) of the aircraft (10), in order to optimize the hinge and inertial moments .

5. Configuration of an aircraft (10) as per claim 1, **characterised by** the fact that the air intake (46) is diverterless on the upper lip of the air intake.

6. Configuration of an aircraft (10) as per claim 1, **characterised by** the fact that the air intake (46) shows a inner lip average leading edge radius (76A) equal to 7 mm, while the lower lip average leading edge radius (78) is equal to 17,5 mm and that of the average outer lip (80) is equal to 14 mm, so that the capture area of the air intake (46) is about 0,322 m², the throat area of the air intake (46) is about 0,257 m² and the engine face area is about 0,273 m².

7. Configuration of an aircraft (10) as per claim 1, **characterised by** the fact that each wing (18, 20) of the aircraft (10) shows trapezoidal platform and at least one saw tooth area (8) in at least one part of the wings pan, this wing(18,20)shows also a leading edge(68)and radius(R)with triangular profile.

8. Configuration of an aircraft (10) as per claim 1, **characterised by** the fact that each wing (18, 20) of the aircraft (10) shows a variable camber profile, both on the leading edge (66) and on the trailing edge (70), in order to optimise camber profile improving compressibility effects.

## Patentansprüche

1. Flugzeuganordnung (10) mit verbesserter Aerodynamik, welche es bei mittleren/großen Angriffswinkeln ermöglicht, die Richtungsstabilität beizubehalten, wobei das Flugzeug (10) einen Flugzeugrumpf (12) mit daran angebrachten Flügeln (18, 20), zumindest einen Lufteinlass (46) und einen Flugzeugrumpf-Vorkörper (52) mit einem spitz zulaufenden Abschnitt umfasst, wobei das Flugzeug (10) eine Flügeleintrittskantenverlängerungs(LEX)-Wirbelleiteinrichtung (72) umfasst, welche eine Form hat, so dass das von einer solchen LEX erzeugte Aufplatzen von Wirbeln bei mittleren bis hohen Angriffswinkeln symmetriert wird, wobei das Verhältnis von LEX-Fläche zur entsprechenden Höhe der LEX-Wirbelleiteinrichtung gleich 2,35 m ist, wobei ein Toleranzbereich dieses Verhältnisses +100% bis -50% ist, wobei die LEX-Wirbelleiteinrichtung mit versetzt angeordneten Leitwerken (44 und 38) zusammenwirkt, was durch eine Kopplung der vertikalen Leitfläche, deren Eintrittskanten (36) mit den Austrittskanten (70) eines jeden Flügels (18, 20) überlappen, mit dem Flügel (18, 20) erreicht wird, um eine Stabilität in Querrichtung aufrechtzuerhalten.

2. Flugzeuganordnung (10) nach Anspruch 1, **dadurch gekennzeichnet, dass** der erwähnte Flugzeugrumpf-Vorkörper (52) mit einem geringen Aspektverhältnis, ausgehend von der Spitze (74) bis zur Kante, an welcher der Vorkörper (52) an die LEX-Spitze gekoppelt ist, ein Profil mit variabler Geometrie aufweist, wobei das Profil, ausgehend von der Spitze (74), einen annähernd kreisförmigen Bereich und an der LEX-Spitze einen kimmförmigen Bereich aufweist.

3. Flugzeuganordnung (10) nach Anspruch 1, **dadurch gekennzeichnet, dass** bei den versetzt angeordneten Leitwerken (44 und 38), die vertikale trapezförmige Leitfläche mit dem Flügel (18, 20) gekoppelt ist, wobei deren Eintrittskanten (36) mit den Austrittskanten (70) eines jeden Flügels (18, 20) überlappen, um das Verhalten des Flugzeugs (10) bei großen Angriffswinkeln zu optimieren.

4. Flugzeuganordnung (10) nach Anspruch 3, **dadurch gekennzeichnet, dass** bei einer solchen versetzten Anordnung von Leitwerken ein horizontales trapezförmiges Leitwerk (44) zu symmetrischen und asymmetrischen Auslenkungen fähig ist, wobei das horizontale Leitwerk eine schräg zur Querachse (88) des Flugzeugs (10) verlaufende Drehachse (86) aufweist, um die Dreh- und internen Momente zu optimieren.

5. Flugzeuganordnung (10) nach Anspruch 1, **dadurch gekennzeichnet, dass** der Lufteinlass (46) an dessen oberen Lippe keinen Abweiser hat.

6. Flugzeuganordnung (10) nach Anspruch 1, **dadurch gekennzeichnet, dass** ein mittlerer Radius (76A) einer inneren Lippe der Eintrittskante des Lufteinlasses (46) gleich 7 mm ist, während der mittlere Radius (78) einer unteren Lippe der Eintrittskante gleich 17,5 mm und der der äußeren Lippe (80) im Durchschnitt gleich 14 mm ist, so dass die Fangfläche des Lufteinlasses (46) ungefähr 0,322 m², die Halsfläche des Lufteinlasses (46) ungefähr 0,257 m² und die Triebwerkseintrittsfläche ungefähr 0,273 m² groß ist.

7. Flugzeuganordnung (10) nach Anspruch 1, **dadurch gekennzeichnet, dass** jeder Flügel (18, 20) des Flugzeugs (10) trapezförmig ist und in zumindest einem Abschnitt der Flügelfelder einen Sägezahnbereich (S) hat, wobei dieser Flügel (18, 20) auch eine Eintrittskante (68) und einen Radius (R) mit dreieckförmigem Profil hat.

8. Flugzeuganordnung (10) nach Anspruch 1, **dadurch gekennzeichnet, dass** jeder Flügel (18, 20) des Flugzeugs (10) sowohl an der Eintrittskante (66) als auch an der Austrittskante (70) ein variables Wölbungsprofil hat, um durch das Wölbungsprofil sich verbessernde Verdichtungseffekte zu optimieren.

## Revendications

1. Configuration d'un aéronef (10) doté de performances aérodynamiques améliorées qui permet de maintenir la stabilité directionnelle suivant des angles d'attaque moyens/grands, ledit aéronef (10) comprenant un fuselage (12) équipé d'ailes (18, 20), au moins une entrée d'air (46) et un avant de fuselage (52) présentant une section effilée, ledit aéronef (10) comprenant un dispositif de contrôle des tourbillons (72) de l'extension de bord d'attaque (LEX), formé de manière à rendre symétrique la dislocation des tourbillons générés par ledit LEX suivant des angles d'attaques moyens ou grands, dans laquelle le rapport entre la surface du LEX et la hauteur du dispositif de contrôle des tourbillons du LEX est égal à 2,35 m avec une plage de tolérance variant entre +100 % et -50 % dudit rapport, ledit dispositif de contrôle des tourbillons du LEX coopérant avec des queues décalées (44 et 38), obtenu en couplant la dérive verticale à l'aile (18, 20), dont les bords d'attaque (36) recouvrent les bords de fuite (70) de chaque aile (18, 20), afin de maintenir la stabilité directionnelle dans le sens latéral.

2. Configuration d'un aéronef (10) selon la revendication 1, **caractérisée par le fait que** ledit avant (52) du fuselage avec un faible rapport d'aspect présente un profil de géométrie variable allant du sommet (74) au bord couplant ledit avant (52) au sommet du LEX, ledit profil présentant, à partir du sommet (74), une section sensiblement circulaire puis, au sommet du LEX, une section en forme de menton.

3. Configuration d'un aéronef (10) selon la revendication 1, **caractérisée par le fait que** les queues décalées (44, 38) servent à coupler la dérive verticale de forme trapézoïdale à l'aile (18, 20) et dont les bords d'attaque (36) recouvrent les bords de fuite (70) de chaque aile (18, 20), afin d'optimiser le comportement de l'aéronef (10) suivant de grands angles d'attaque.

4. Configuration d'un aéronef (10) selon la revendication 3, **caractérisée par le fait que** ledit décalage des queues est obtenu par le biais d'une queue horizontale (44) dotée d'une plateforme trapézoïdale et d'une capacité de déflexion symétrique et assymétrique, la queue horizontale possédant un axe de pivotement (86) incliné par rapport à un axe latéral (88) de l'aéronef (10) afin d'optimiser les moments de charnière et d'inertie.

5. Configuration d'un aéronef (10) selon la revendication 1, **caractérisée par le fait que** l'entrée d'air (46) est dépourvue de déflecteur sur le bord supérieur de l'entrée d'air.

6. Configuration d'un aéronef (10) selon la revendication 1, **caractérisée par le fait que** l'entrée d'air (46) présente un rayon (76A) de bord d'attaque moyen du bord interne égal à 7 mm, alors que le rayon (78) du bord d'attaque moyen du bord inférieur est égal à 17,5 mm et celui du bord externe moyen (80) est égal à 14 mm, de sorte que la surface balayée de l'entrée d'air (46) est d'environ 0,322 m², l'aire de ventilation de l'entrée d'air (46) est d'environ 0,257 m² et la surface de la partie amont du moteur est d'environ 0,273 m².

7. Configuration d'un aéronef (10) selon la revendication 1, **caractérisée par le fait que** chaque aile (18, 20) de l'aéronef (10) présente une plateforme trapézoïdale et au moins une surface en dents de scie (8) sur au moins une partie de la voilure, ladite aile (18, 20) présentant également un bord d'attaque (68) et un rayon (R) de profil triangulaire.

8. Configuration d'un aéronef (10) selon la revendication 1, **caractérisée par le fait que** chaque aile (18, 20) de l'aéronef (10) présente un profil de cambrure variable à la fois au niveau du bord d'attaque (66) et du bord de fuite (70), afin d'optimiser le profil de cambrure destiné à améliorer les effets de compressibilité.
